Europäisches Patentamt

European Patent Office

Office européen des brevets

(11) Veröffentlichungsnummer: **0 520 317 A1**

## (12) EUROPÄISCHE PATENTANMELDUNG

(21) Anmeldenummer: **92110236.4**

(22) Anmeldetag: **17.06.92**

(51) Int. Cl.5: **C01B 17/04**

(30) Priorität: **27.06.91 DE 4121290**

(43) Veröffentlichungstag der Anmeldung:
**30.12.92 Patentblatt 92/53**

(84) Benannte Vertragsstaaten:
**DE ES FR GB IT NL**

(71) Anmelder: **Linde Aktiengesellschaft**
**Abraham-Lincoln-Strasse 21**
**W-6200 Wiesbaden(DE)**

(72) Erfinder: **Heisel, Michael, Dr. Dipl.-Ing.**
**Gistlstrasse 54**
**W-8023 Pullach(DE)**
Erfinder: **Marold, Freimut, Dipl.-Ing.**
**Gottfried-Keller-Strasse 24**
**W-8012 Ottobrunn(DE)**

(74) Vertreter: **Schaefer, Gerhard, Dr.**
**Linde Aktiengesellschaft Zentrale**
**Patentabteilung**
**W-8023 Höllriegelskreuth(DE)**

(54) Verfahren zur thermischen Umsetzung von Schwefelwasserstoff zu elementarem Schwefel.

(57) Verfahren zur thermischen Umsetzung von in einem Gasstrom enthaltenem Schwefelwasserstoff mit Schwefeldioxid zu elementarem Schwefel (1a), bei dem der Schwefelwasserstoff enthaltende Gasstrom zusammen mit Schwefeldioxid, das aus einer, dem ausschließlich thermisch betriebenen Reaktor nachgeschalteten Abgasreinigungsanlage (2) stammt, in den Reaktor (1a) geführt, der entstehende dampfförmige Schwefel durch Abkühlen auskondensiert (1b) und als Produkt gewonnen und der von Schwefelverbindungen weitgehend befreite Gasstrom abgezogen und der nachgeschalteten Abgasreinigungsanlage zugeführt wird.

Bei Bedarf kann die Schwefelausbeute über die Zugabe von zusätzlichem Brenn- und/oder Reduziergas und/oder Prozeßluft in den Reaktor gesteuert werden.

Fig. 1

EP 0 520 317 A1

Die Erfindung betrifft ein Verfahren zur thermischen Umsetzung von in einem Gasstrom enthaltenem Schwefelwasserstoff mit Schwefeldioxid zu elementarem Schwefel, bei dem der Schwefelwasserstoff enthaltende Gasstrom zusammen mit Schwefeldioxid, das aus einer, dem Reaktor nachgeschalteten Abgasreinigungsanlage stammt, in den Reaktor geführt, der entstehende dampfförmige Schwefel durch Abkühlen auskondensiert und als Produkt gewonnen und der von Schwefelverbindungen weitgehend befreite Gasstrom abgezogen und der nachgeschalteten Abgasreinigungsanlage zugeführt wird.

Ein bei der Verarbeitung von Rohgasströmen häufig erforderlicher Verfahrensschritt ist die Abtrennung von Sauergasen, worunter im wesentlichen $CO_2$, $H_2S$ und Merkaptane zu verstehen sind. Diese Abtrennung kann auf verschiedene Weise erfolgen, beispielsweise adsorptiv oder durch Wäsche. Von besonderem Vorteil ist es dabei, wenn das Kohlendioxid und die schwefelhaltigen Sauergase getrennt aus den Rohgasströmen entfernt werden. Hierzu eignen sich sowohl chemische als auch physikalische Waschverfahren in besonderer Weise, wobei letzteren insbesondere dann der Vorrang eingeräumt wird, wenn die Rohgasströme stark $CO_2$-haltig sind. Die beispielsweise bei der für $H_2S$ selektiven Wäsche anfallenden, mit $H_2S$ angereicherte Restgasfraktion enthält, je nach dem Schwefelwasserstoffgehalt des zu reinigenden Gasstromes, üblicherweise zwischen 25 und 90 Mol-% $H_2S$.

Es ist bereits seit langem bekannt, aus einem derart mit $H_2S$ angereicherten Gasstrom Schwefel zu gewinnen. Dies kann beispielsweise gemäß einer auf der Claus-Reaktion

$$2\ H_2S\ +\ SO_2\ \dashrightarrow\ 3/x\ S_x\ +\ 2\ H_2O\ +\ \Delta H$$

(mit x = 1,...,8 ) basierenden Schwefelgewinnungsanlage (Claus-Anlage) geschehen.

Bei Schwefelgewinnungsanlagen im technischen Maßstab war bisher die Verwendung eines Katalysators unverzichtbar. Hierbei liegen die Vorteile des Katalysators in seiner Aktivität bei tieferen Temperaturen, wodurch hohe Ausbeuten an Schwefel aufgrund der bei niedrigen Temperaturen verbesserten Gleichgewichtslage ermöglicht werden. Bei entsprechenden Investitionen liegen die Ausbeutegrenzen des Schwefels bei etwa 99,5 Mol-%. Ein wesentlicher Nachteil dieser Verfahren liegt - besonders bei den Verfahren, die auf höchste Ausbeute ausgelegt sind - in der Empfindlichkeit der verwendeten Katalysatoren. So können bestimmte chemische Verbindungen, die relativ häufig in den Einsatzgasen präsent sind, wie z.B. Ammoniakverbindungen, zu Verlegungen und damit verbundener schnellen Desaktivierung des Katalysators führen. Auch eventuell vorhandene Sauerstoffspuren bewirken eine Sulfatierung und Katalysatordesaktivierung.

Aus der DE-OS 34 03 651 ist ein Verfahren zur katalytischen Umsetzung von in einem Gasstrom enthaltenem Schwefelwasserstoff mit Schwefeldioxid zu elementarem Schwefel bekannt. Dazu wird der vorgewärmte Gasstrom zur Umsetzung über ein Katalysatorbett, in dem eine Temperatur von 125 bis 450°C aufrechterhalten wird, geleitet. Der dabei entstehende dampfförmige Schwefel wird durch Abkühlen auskondensiert und der von Schwefelverbindungen weitgehend befreite Gasstrom abgezogen. Zur Maximierung der Schwefelausbeute erfolgt das Darüberleiten des Gasstromes auf eine Art und Weise, die nur minimale Druckverluste nach sich zieht. Ferner wird das Katalysatorbett mittels eines Kühlmediums von innen gekühlt. Aufgrund dieser Verfahrensweise läßt sich die Schwefelausbeute bis nahe an den theoretisch möglichen Wert heranbringen.

Darüber hinaus sind dem Fachmann mehrere Varianten des Claus-Verfahrens bekannt, bei denen die Umsetzung des Schwefelwasserstoff enthaltenden Gasstromes zu elementarem Schwefel auf katalytischem Wege erfolgt.

Katalytische Umwandlungsprozesse verlangen als Vorbedingung für das Erreichen hoher Ausbeuten eine möglichst exakte Einhaltung der Stöchiometrie. In der Praxis jedoch schwanken Einsatzgasmenge sowie -zusammensetzung, so daß die Regelung den optimalen Betriebspunkt ständig umfährt und die theoretisch mögliche Ausbeute nicht erreicht werden kann.

Katalysatorbetten, die mit Schwefel beladen werden, sind anfällig gegen Feuer, weswegen der Einsatzgasstrom frei von Sauerstoff gehalten werden muß. Da bei An- und Abfahrvorgängen nicht mit Sauergas gefahren werden kann, verwendet man stattdessen Erdgas. Dieses wird knapp stöchiometrisch verbrannt, um ein möglichst sauerstoffarmes und heißes Inertgas für die Schwefelgewinnungsanlage bereitstellen zu können. Nur so kann vermieden werden, daß Sauerstoff bis in die Reaktoren gelangt, in denen der angelagerte Schwefel ansonsten bei Sauerstoffeintrag spontan mit sehr heißer Flamme verbrennen würde, was zu sehr großen Schäden führen kann.

Der vorliegenden Erfindung liegt daher die Aufgabe zugrunde, ein Verfahren der eingangs genannten Art so auszugestalten, daß die Investitions- und Betriebskosten einer Schwefelgewinnungsanlage wesentlich gesenkt werden sowie der Betrieb der Anlage verfahrenstechnisch vereinfacht wird. Darüber hinaus wird nach einer deutlichen Verminderung der Schadstoffemission getrachtet, und zwar nicht nur der Emission von Schwefelverbindungen, sondern insbesondere auch des Kohlendioxidausstoßes.

Diese Aufgabe wird erfindungsgemäß dadurch gelöst, daß die Umsetzung des Schwefelwasserstoff enthaltenden Gasstromes mit Schwefeldioxid zu elementarem Schwefel und die Gewinnung eines von Schwefelverbindungen weitgehend befreiten Gasstroms in mindestens einem ausschließlich thermisch betriebenen Reaktor erfolgt.

Die Erfindung basiert auf dem Gedanken, anstelle der bisher üblichen katalytischen Umwandlung von Schwefelwasserstoff enthaltenden Gasströmen zu elementarem Schwefel, den Weg der thermischen Umwandlung zu wählen.

Die Vermeidung der Verwendung eines Katalysators resultiert nun sowohl in einer Senkung der Investitions- und Betriebskosten als auch in einem verfahrenstechnisch vereinfachten Betrieb der Schwefelgewinnungsanlage.

Das erfindungsgemäße Verfahren ermöglicht eine nahezu optimale Ausnutzung der im Einsatzgasstrom enthaltenen chemischen Energie. Der im Einsatzgasstrom enthaltene Schwefelwasserstoff reagiert mit dem, aus der dem Reaktor nachgeschalteten Abgasreinigungsanlage rückgeführten Schwefeldioxid im Brennraum des Reaktors bei einer Temperatur zwischen 800 und 1600°C zu elementarem Schwefel und Wasser. Dadurch sind Schwefelausbeuten von über 70% erreichbar. Der Heizwert der verbleibenden, nicht konvertierten Komponenten ist beim erfindungsgemäßen Verfahren noch so groß, daß in der nachfolgenden thermischen Oxidation der verbliebenen Schwefelverbindungen eine Zufuhr von zusätzlichem Brenngas entweder ganz unterbleiben oder zumindest wesentlich reduziert werden kann.

Die Gesamtausbeute an Elementarschwefel leidet trotz der vergleichsweise geringen Schwefelausbeute am Ausgang des Reaktors nicht, da in der nachgeschalteten Abgasreinigungsanlage entsprechend mehr Schwefeldioxid gewonnen und vor den Reaktor zurückgeführt werden kann.

Der mögliche Verzicht auf Heizgas verringert die in der Abgasreinigungsanlage zu behandelnde Inertgasmenge beträchtlich, da die Erzeugung von Kohlendioxid, das aus der Verbrennung des Heizgases, üblicherweise Kohlenstoff-haltigen Gasen, stammt, wesentlich verringert wird.

Aus diesem Grund kann auch die Schwefeldioxid-Waschanlage kleiner dimensioniert werden, da deren bestimmendes Merkmal, nämlich die Waschmittelumlaufmenge, in erster Näherung proportional zu der Menge an Inertgas ist.

In herkömmlichen Schwefelgewinnungsanlagen fallen große Dampfmengen auf niedrigem Druckniveau an, da die stufenweise Katalyse und Schwefelkondensation zum einen auf einem niedrigen Temperaturniveau, da günstiger Arbeitsbereich des Katalysators, stattfindet, und zum anderen die maximale Schwefelkondensation in der Nähe des Schwefelfestpunktes erfolgt, wodurch das Dampfniveau in der Regel auf höchstens 4,5 bar, minimal auf 2,0 bar festgelegt ist. Demgegenüber arbeitet das erfindungsgemäße Verfahren bei wesentlich höheren Temperaturen - bis 1600°C -, wodurch eine, gegenüber konventionellen Claus-Anlagen vermehrte Gewinnung von er- bzw. überhitztem Hochdruckdampf möglich ist. Dieser Hochdruckdampf wird beim erfindungsgemäßen Verfahren aus Kesselspeisewasser im Abhitzekessel des Reaktors gewonnen.

Nach wie vor fällt in der Schwefelgewinnungsanlage Niederdruckdampf an - er wird zur Regenerierung des beladenen Waschmittels in der nachgeschalteten Abgasreinigungsanlage verwendet - das Verhältnis von Hochdruck- zu Niederdruckdampfmenge wird jedoch um ein Vielfaches verbessert.

Die Vermeidung der Verwendung eines Katalysators erlaubt auch die Verarbeitung von verunreinigten Gasen. Dadurch kann eine ansonsten notwendige und teuere Vorreinigung des Einsatzgasstromes vermieden werden, so daß die Druckverluste, die sich durch die Vorreinigung und das Durchströmen des Katalysators einstellen, vermieden werden. Dies erspart eventuell notwendige Kompressoren zwischen den einzelnen Anlagenteilen, wie sie bei bereits bekannten Verfahren notwendig werden können.

Die Verwendung von Katalysatoren verursacht zudem unangenehme und unerwünschte Nebenreaktionen in Schwefelgewinnungsanlagen. Hier sei als Beispiel die Entstehung von $COS/CS_2$ in der thermischen Stufe einer Claus-Anlage genannt. Einmal entstandenes $COS/CS_2$ kann die Schwefelausbeute unter Umstanden drastisch verschlechtern. Ein Abbau des $COS/CS_2$ ist in der Katalyse nur durch eine Steigerung des Temperaturniveaus auf wenigstens 330°C. möglich, womit sich jedoch die Schwefelbildungsrate nach der Claus-Reaktion verringert. COS und $CS_2$ sind beim erfindungsgemäßen Verfahren keine ausbeuteverschlechternden Problemstoffe mehr. Zwar werden auch sie, wie bei den bisherigen Verfahren, erzeugt, allerdings erfolgt ihre Umwandlung zu Schwefeldioxid bei der Verbrennung in der nachgeschalteten Abgasreinigungsanlage zu nahezu 100%.

In einer Ausgestaltung des erfindungsgemäßen Verfahrens wird, zusätzlich zu dem Schwefelwasserstoff enthaltenden Einsatzgasstrom und dem aus der nachgeschalteten Abgasreinigungsanlage rückgeführten Schwefeldioxid, Brenngas in den Reaktor geführt. Bei dem verwendeten Brenngas kann es sich um Erd-, Raffinerie- oder Sauerwasserstrippergas handeln, das, falls erwünscht, vor seiner Zuführung in den Reaktor auf beliebige Art und Weise zerlegt werden kann.

Diese zusätzliche Brenngaszuführung kann vor allem dann Verwendung finden, wenn das Temperaturniveau in der Brennkammer des Reaktors noch zu niedrig ist, um eine alleinige und gute Umsetzung von Schwefelwasserstoff und Schwefeldioxid zu Elementarschwefel und Wasser zu ermöglichen. Unter Umständen, insbesondere bei einer geringen Konzentration des Schwefelwasserstoffs im Einsatzgas, kann die Schwefelausbeute im Reaktor unter 2/3 des Schwefelgehalts im Einsatzgasstrom sinken, so daß sich Schwefeldioxid im Kreislauf Reaktor/Abgasreinigungsanlage anreichern würde. In diesem Fall wird mittels einer unterstöchiometrischen Verbrennung des Brenngases eine heiße, reduzierende Gasatmosphäre erzeugt, in der dann so viel Schwefeldioxid reduziert wird, daß die oben beschriebene Claus-Reaktion unter richtigen, stöchiometrischen Bedingungen ablaufen kann. Stellvertretend für eine Reihe von möglichen typischen Reaktionen seien genannt:

$$SO_2 + 3\,H_2 \longrightarrow H_2S + 2\,H_2O \text{ bzw.}$$
$$2\,SO_2 + CH_4 \longrightarrow S_2 + 2\,H_2O + CO_2$$

Eine weitere Ausgestaltung des erfindungsgemäßen Verfahrens ist dadurch gekennzeichnet, daß in einer ersten Stufe des Reaktors eine oxidierende Atmosphäre und in einer zweiten Stufe des Reaktors eine reduzierende Atmosphäre eingestellt wird, was insbesondere bei der Verbrennung von $NH_3$ vorteilhaft ist. Denn nur bei hohen Temperaturen ( $> 1300\,°C$ ) und $O_2$-Überschuß ist zuverlässig ein vollständiger Umsatz von $NH_3$ zu erreichen. In der zweiten Stufe des Reaktors erfolgt dann die Zuspeisung von $H_2S$ und $SO_2$, so daß sich eine reduzierende Atmosphäre einstellt.

Eine weitere Ausführung des erfindungsgemäßen Verfahrens sieht die Zufuhr eines Reduziergases in den Reaktor vor. Stellvertretend für die nahezu unübersehbare Gruppe dieser Gase seien Wasserstoff und Methan genannt.

Die in weiteren Ausgestaltungen der Erfindung vorgesehene Zuführung von Prozeßluft in den Reaktor erlaubt auf einfache Art und Weise die Regelung der Prozeßstöchiometrie im Reaktor, wodurch letztendlich die Ausbeute an Elementarschwefel bestimmt wird.

Weitere Ausgestaltungen des erfindungsgemäßen Verfahrens sehen eine Vorwärmung der Prozeßluft sowie eine Anreicherung dieser Prozeßluft mit Sauerstoff vor. Die Sauerstoffkonzentration der mit Sauerstoff angereicherten Prozeßluft liegt zwischen 21 und 100 Mol-%, vorzugsweise zwischen 30 und 60 Mol-%.

Eine weitere Ausgestaltung des erfindungsgemäßen Verfahrens ist dadurch gekennzeichnet, daß der gebildete Elementarschwefel und der von Schwefelverbindungen befreite Gasstrom in einem Abhitzekessel des Reaktors gegen Kesselspeisewasser abgekühlt werden. Dabei kommt es zu einer Erzeugung und optimalen Überhitzung von Prozeßdampf, der sowohl innerhalb der Schwefelgewinnungsanlage Verwendung finden kann, sei es zur Anwärmung von Gasströmen, sei es durch Einleiten in die Brennkammer des Reaktors zur Verringerung der Rußbildung, als auch mittels Expansionsturbinen arbeitsleistend und somit energiegewinnend entspannt werden kann. Die Reaktionsraumtemperaturen des Reaktors liegen beim erfindungsgemäßen Verfahren zwischen 800 und 1600 °C, vorzugsweise zwischen 900 und 1300 °C, wobei in der Flamme selbst deutlich höhere Temperaturen vorliegen können.

Im folgenden sei das erfindungsgemäße Verfahren anhand eines schematisch dargestellten Ausführungsbeispieles näher erläutert.

Alle Mengenangaben, soweit nicht anders angegeben, erfolgen in Volumen-Prozent.

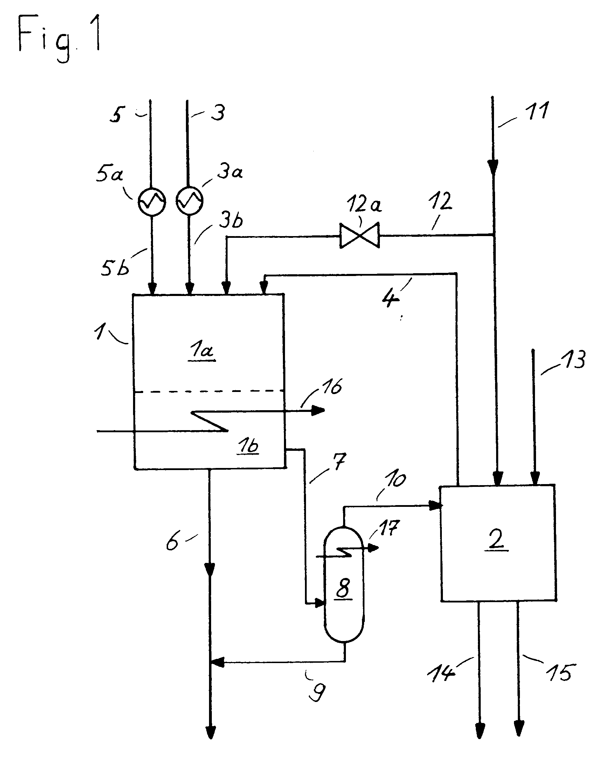

Der in Figur 1 dargestellte ausschließlich thermisch betriebene Reaktor 1 besteht im wesentlichen aus dem eigentlichen Brennraum 1a und einem Abhitzekessel 1b. Die dem thermisch betriebenen Reaktor 1 und dem später noch zu beschreibenden Kondensator 8 nachgeschaltete Abgasreinigungsanlage 2 ist hier nur schematisch dargestellt. Der Aufbau sowie die Verfahrensweise dieser Abgasreinigungsanlage wird sich in der Praxis an den entsprechenden Vorgaben bezüglich Elementarschwefelausbeute, Abgaswerte etc, orientieren. Im dargestellten Beispiel besteht sie aus einer Nachverbrennung des von Schwefelverbindungen weitgehend befreiten Gasstromes des Reaktors mit einer anschließenden Schwefeldioxid-Wäsche.

Über Leitung 3 wird ein unter Druck stehendes Schwefelwasserstoff enthaltendes Einsatzgas mit folgender Zusammensetzung herangeführt:

| | |
|---|---|
| $H_2S$ | 89 |
| $CO_2$ | 5 |
| $CH_4$ | 5 |
| sonstige Komponenten | 1 |
| $H_2O$ | gesättigt |

Im Wärmetauscher 3a wird dieses Gasgemisch gegen abzukühlenden Prozeßdampf auf 350°C erwärmt und über Leitung 3b in den Brennraum 1a des thermisch betriebenen Reaktors 1 geführt. Die Brennraumtemperatur beträgt 1130°C, und die Verbrennung findet bei einem Druck von 1,4 bar statt.

Über Leitung 4 wird hochkonzentriertes, unter Druck stehendes Schwefeldioxid (Schwefeldioxidkonzentration ≃ 90 Mol-%), das bei der Nachreinigung des Schwefelverbindungen enthaltenden Abgases aus dem Schwefelkondensator 8 gewonnen wird, aus der Abgasreinigungsanlage 2 in den Brennraum 1a geführt. Die Temperatur des Schwefeldioxidgases beträgt beim Eintritt in den Brennraum 1a 45°C. Über Leitung 5 wird unter Druck stehende Prozeßluft zum Wärmetauscher 5a geführt, in ihm gegen abzukühlenden Prozeßdampf auf 70°C erwärmt und mittels Leitung 5b ebenfalls in den Brennraum 1a geleitet. Eine mögliche Sauerstoffanreicherung dieser Prozeßluft ist der Übersicht halber nicht dargestellt.

Im Abhitzekessel 1b des thermischen Reaktors 1 erfolgt nun durch Abkühlen das Auskondensieren des dampfförmigen Schwefels, der sodann als Produktstrom mittels Leitung 6 mit einer Schwefelkonzentration von 99,9 Vol-% und einer Temperatur von 300°C gewonnen wird. Die im Abhitzekessel 1b freiwerdende Wärme wird zum Erzeugen und Überhitzen von Hochdruckdampf aus Kesselspeisewasser genützt. Dieses Kesselspeisewasser wird über Leitung 16 in den Abhitzekessel 1b geführt und verläßt ihn über Leitung 16 als überhitzter Hochdruckdampf, der wiederum zum Anwärmen der Ströme in Leitung 3 und/oder 5 dienen kann.

Der über Leitung 7 abgezogene, von Schwefelverbindungen teilweise befreite Gasstrom wird unter Druck stehend mit einer Temperatur von 300°C einem Kondensator 8 mit folgender Zusammensetzung zugeführt:

| | |
|---|---|
| $SO_2$ | 6 |
| $H_2S$ | 10 |
| $S_{6+}$ | 6 |
| $H_2O$ | 35 |
| $N_2$ | 35 |
| $CO_2$ | 4 |
| $H_2$ | 3 |
| sonstige Komponenten | 1 |

Nach einer Abkühlung auf 140°C wird über Leitung 9 ein zweiter Produktstrom mit einer Schwefelkonzentration von 99,9 Vol-% abgezogen und mit dem Produktstrom in Leitung 6 vereinigt.

Die im Kondensator 8 freiwerdende Wärme wird zum Verdampfen des in Leitung 17 durch den Kondensator geführten Kesselspeisewassers unter Erzeugung von Niederdruckdampf verwendet. Als Einsatzmöglichkeit für den Niederdruckdampf bietet sich die Regenerierung des $SO_2$-beladenen Waschmittels in der Abgasreinigungsanlage 2 an.

Mittels Leitung 10 wird unter Druck stehendes Gas mit einer Temperatur von 140°C und folgender Zusammensetzung

| | |
|---|---|
| $SO_2$ | 6 |
| $H_2S$ | 10 |
| $H_2O$ | 38 |
| $N_2$ | 37 |
| $CO_2$ | 4 |
| $H_2$ | 3 |
| sonstige Komponenten | 2 |

in die nachgeschaltete Abgasreinigungsanlage 2 geführt.

Für die Nachverbrennung des noch Schwefelverbindungen enthaltenden Abgases, das mittels Leitung 10 der Abgasreinigungsanlage 2 zugeführt wird, werden Brenngas und Prozeßluft benötigt. Das unter Druck stehende Brenngas in Leitung 11 weist bei einer Temperatur von 38°C folgende Zusammensetzung auf:

| CH$_4$ | 35 |
|---|---|
| C$_{2+}$ | 37 |
| N$_2$ | 17 |
| H$_2$ | 10 |
| sonstige Komponenten | 1 |

Über Leitung 12 und Ventil 12a kann ein Teil dieses Brenngases, falls notwendig in den Brennraum 1a des ausschließlich thermisch betriebenen Reaktors 1 geführt werden.

Leitung 13 versorgt die Abgasreinigungsanlage mit unter Druck stehender Prozeßluft, während Leitung 14 die Abwasserleitung und Leitung 15 die Abgasleitung an die Atmosphäre darstellt. Die Zusammensetzung des an die Atmosphäre abgegebenen Abgases in Leitung 15 lautet wie folgt:

| N$_2$ | 87 |
|---|---|
| O$_2$ | 2 |
| CO$_2$ | 6 |
| H$_2$O | 5 |
| SO$_2$ < 100 ppm. | |

**Patentansprüche**

1. Verfahren zur thermischen Umsetzung von in einem Gasstrom enthaltenem Schwefelwasserstoff mit Schwefeldioxid zu elementarem Schwefel, bei dem der Schwefelwasserstoff enthaltende Gasstrom zusammen mit Schwefeldioxid, das aus einer, dem Reaktor nachgeschalteten Abgasreinigungsanlage stammt, in den Reaktor geführt, der entstehende dampfförmige Schwefel durch Abkühlen auskondensiert und als Produkt gewonnen und der von Schwefelverbindungen weitgehend befreite Gasstrom abgezogen und der nachgeschalteten Abgasreinigungsanlage zugeführt wird, **dadurch gekennzeichnet**, daß die Umsetzung des Schwefelwasserstoff enthaltenden Gasstromes mit Schwefeldioxid zu elementarem Schwefel und die Gewinnung eines von Schwefelverbindungen weitgehend befreiten Gasstroms in mindestens einem ausschließlich thermisch betriebenen Reaktor erfolgt.

2. Verfahren nach Anspruch 1, dadurch gekennzeichnet, daß, zusätzlich zu dem Schwefelwasserstoff enthaltenden Gasstrom und dem rückgeführten Schwefeldioxid, Brenngas in den Reaktor geführt wird.

3. Verfahren nach Anspruch 2, dadurch gekennzeichnet, daß es sich bei dem zugeführten Brenngas um Erdgas, Raffineriegas oder Sauerwasserstrippergas handelt.

4. Verfahren nach einem der Ansprüche 2 oder 3, dadurch gekennzeichnet, daß das Brenngas vor der Zuführung in den Reaktor zersetzt wird.

5. Verfahren nach einem der Ansprüche 1 bis 4, dadurch gekennzeichnet, daß in einer ersten Stufe des Reaktors eine oxidierende Atmosphäre und in einer zweiten Stufe des Reaktors eine reduzierende Atmosphäre eingestellt wird.

6. Verfahren nach einem der Ansprüche 1 bis 5, dadurch gekennzeichnet, daß dem Reaktor ein Reduziergas zugeführt wird.

7. Verfahren nach einem der Ansprüche 1 bis 6, dadurch gekennzeichnet, daß dem Reaktor Prozeßluft zugeführt wird.

8. Verfahren nach Anspruch 7, dadurch gekennzeichnet, daß die Prozeßluft vor dem Eintritt in den Reaktor vorgewärmt wird.

9. Verfahren nach einem der Ansprüche 7 oder 8, dadurch gekennzeichnet, daß die Prozeßluft vor dem Eintritt in den Reaktor mit Sauerstoff angereichert wird.

**10.** Verfahren nach Anspruch 9, dadurch gekennzeichnet, daß die Sauerstoffkonzentration der mit Sauerstoff angereicherten Prozeßluft zwischen 21 und 100 Mol-%, vorzugsweise zwischen 30 und 60 Mol-%, liegt.

**11.** Verfahren nach einem der Ansprüche 1 bis 10, dadurch gekennzeichnet, daß der elementare Schwefel und der von Schwefelverbindungen befreite Gasstrom gegen Kesselspeisewasser und den dadurch entstehenden, überhitzten Dampf abgekühlt werden.

**12.** Verfahren nach einem der Ansprüche 1 bis 11, dadurch gekennzeichnet, daß die Temperatur außerhalb der Flammenzone im Reaktor zwischen 800 und 1600 °C, vorzugsweise zwischen 900 und 1300 °C, liegt.

EP 0 520 317 A1

# Fig. 1

8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 234 894 (THE BOC GROUP, INC.)<br>* Seite 4, Absatz 1 - Seite 5, Absatz 1 *<br>* Seite 6, Absatz 1 - Seite 10, Absatz 4 *<br>* Ansprüche 1-4; Abbildung *<br>--- | 1,7,9-12 | C01B17/04 |
| A | EP-A-0 270 223 (THE DOW CHEMICAL COMPANY)<br><br>* Seite 3, Zeile 7 - Zeile 27 *<br>* Seite 6, Zeile 21 - Seite 9, Zeile 15 *<br>* Ansprüche 1-3,5 *<br>--- | 1-3,5-7, 12 | |
| A | DE-A-3 628 358 (LINDE AG)<br><br>* Ansprüche 1-4 *<br>* Spalte 2, Zeile 9 - Zeile 49 *<br>* Spalte 4, Zeile 43 - Spalte 5, Zeile 37 *<br>--- | 1-3,6,7, 11,12 | |
| A | GB-A-2 117 749 (DAVY MCKEE AKTIENGESELLSCHAFT)<br><br>* Seite 1, Zeile 1 - Zeile 73 *<br>* Seite 1, Zeile 89 - Zeile 106 *<br>* Seite 2, Zeile 26 - Zeile 66 *<br>* Seite 2, Zeile 83 - Zeile 96 *<br>* Seite 3, Zeile 2 - Zeile 35 *<br>* Abbildungen 1,3 *<br><br>----- | 1,2,4,6, 7,12 | **RECHERCHIERTE SACHGEBIETE (Int. Cl.5 )**<br><br>C01B |

Der vorliegende Recherchenbericht wurde für alle Patentansprüche erstellt

| Recherchenort | Abschlußdatum der Recherche | Prüfer |
|---|---|---|
| DEN HAAG | 21 SEPTEMBER 1992 | VAN DER POEL W. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..............................................................................................
& : Mitglied der gleichen Patentfamilie, übereinstimmendes
    Dokument

EPO FORM 1503 03.82 (P0403)